# FASCICULE DE BREVET EUROPEEN

(11) **EP 3 160 723 B1**
(45) Date de publication et mention de la délivrance du brevet: **04.12.2019**
(21) Numéro de dépôt: 15742061.3
(22) Date de dépôt: 28.06.2015
(51) Int. Cl.: B29D 30/06

(54) **ÉLÉMENT DE MOULE COMPORTANT UNE TEXTURE À FORT CONTRASTE**
FORMELEMENT MIT EINER KONTRASTREICHEN STRUKTURIERTEN OBERFLÄCHE
MOULD ELEMENT HAVING A HIGH-CONTRAST TEXTURED SURFACE

(30) Priorité: 30.06.2014 FR 1401466
(43) Date de publication de la demande: 03.05.2017
(73) Titulaire: Compagnie Générale des Etablissements Michelin, 63000 Clermont-Ferrand (FR)
(72) Inventeur: GUEUGNEAU, Anthony, F-63040 Clermont-Ferrand Cédex 9 (FR); MONTZIEUX, Stéphane, F-63040 Clermont-Ferrand Cédex 9 (FR); BLANCHET, Etienne, F-63040 Clermont-Ferrand Cédex 9 (FR)
(74) Mandataire: Roussy, Delphine
(86) Numéro de dépôt international: PCT/IB2015/001069
(87) Numéro de publication internationale: WO 2016/001733

(56) Documents cités:
- WO-A1-2010/076502
- WO-A1-2012/171802
- WO-A1-2014/040967
- WO-A1-2014/060209
- DE-A1- 19 928 863

## Description

### DOMAINE TECHNIQUE DE L'INVENTION

La présente invention concerne un élément de moule pour pneumatique comprenant une surface d'appui et, à l'opposé, une surface de moulage, destinée à former la surface externe dudit pneumatique.

### ETAT DE LA TECHNIQUE ANTERIEURE

La surface des pneumatiques supporte une grande quantité de marquages destinés d'une part à donner des informations techniques sur la qualité du pneumatique, et d'autre part à permettre au consommateur de distinguer la marque et l'origine du produit. Ces marquages sont, en règle générale, obtenus par des motifs en relief disposés sur la surface du pneumatique et correspondent à des motifs en creux réalisés sur la surface de moulage. Usuellement, les moules de vulcanisation sont réalisés en métal avec un très bon aspect de finition de surface. Mais la surface externe du pneumatique qui en résulte, lisse et noire, a pour effet de renvoyer la lumière.

Le document WO2007/045425 décrit des types particuliers de textures à fort contraste sur pneumatique. Ces textures ont pour effet principal de piéger la lumière incidente et, par absorption de la lumière, de donner un aspect noir et mat à une partie du pneumatique. Cette absorption de lumière permet l'obtention d'une couleur noire plus intense et formant un meilleur contraste avec le reste de la surface du pneumatique. Le contraste est d'autant plus important lorsque la texture côtoie des surfaces brillantes sur le pneumatique.

Le contraste obtenu par cette absorption de lumière produit un effet visuel notable sur la finition du produit, souvent apparenté à l'aspect visuel du velours. Or, l'obtention des textures produisant un tel effet constitue encore à ce jour un challenge technologique qui n'est que partiellement solutionné. En effet, les procédés actuels sont relativement coûteux et fastidieux à mettre en œuvre, et permettent de produire uniquement certains types de motifs, à certains endroits, généralement faciles d'accès.

La demande de brevet WO 2010/076502 propose un ensemble de garniture pour moule de pneumatique comprenant une peau. La peau est délimitée par une première et une seconde surface opposées, la première surface étant destinée à être en contact avec un bloc support d'un moule de pneumatique, et une pluralité d'éléments de garniture en saillie de la seconde surface de la peau, ces éléments étant destinés à former des sculptures d'une partie d'une surface radialement externe d'un pneumatique. Un tel ensemble permet d'obtenir des sculptures classiques telles que celles de la bande de roulement des pneumatiques classiques.

La demande WO2014060209 décrit un élément moulant pour un moule de pneumatique fabriqué à partir d'une poudre métallique fusionnée couche par couche. Cet élément moulant comporte une première surface destinée à mouler tout ou partie d'une surface de roulement de pneumatique et une seconde surface opposée à la première surface, destinée à être en contact avec une autre partie du moule. L'épaisseur de l'élément moulant est comprise entre 1 et 6 millimètres. L'élément moulant a globalement une densité supérieure ou égale à 98%. L'élément moulant comprend en outre au moins une première zone poreuse s'étendant dans l'épaisseur dudit élément de moule. La première zone poreuse comprend une pluralité de pores permettant un passage d'air entre la première surface de l'élément moulant et sa seconde surface.

Il existe aujourd'hui un besoin pour des solutions permettant de produire des pneumatiques pourvus de textures noires intenses avec une grande souplesse et des coûts avantageux.

Pour pallier ces différents inconvénients, l'invention prévoit différents moyens techniques.

### EXPOSE DE L'INVENTION

Tout d'abord, un premier objet de l'invention consiste à prévoir un système de moulage ou élément de moule permettant une utilisation sur une grande variété de pneumatiques, et permettant de produire différents types de motifs ou textures.

Un autre objet de l'invention consiste à prévoir un système de moulage ou élément de moule pouvant être obtenu à des coûts et suivants des temps de production compétitifs.

Encore un autre objet de l'invention consiste à prévoir un système de moulage ou élément de moule permettant de disposer des motifs sans restriction de positionnement dans le moule, permettant d'obtenir sur le pneu des textures particulières sur la surface de la bande de roulement, par exemple une texture de type velours, ou un marquage graphique particulier.

Encore un autre objet de l'invention consiste à prévoir un système de moulage ou élément de moule permettant de modifier facilement et rapidement la configuration d'un moule pour produire un pneumatique avec une ou plusieurs textures différentes.

Pour ce faire, l'invention prévoit un élément de moule selon la revendication 1, destiné à être rapporté dans un moule pour la vulcanisation de pneumatiques, l'élément de moule présentant la forme d'une peau ayant une épaisseur comprise entre 0,25 et 6 mm, la peau comprenant une surface d'appui et, à l'opposée, une surface de moulage, destinée à former tout ou partie de la surface externe dudit pneumatique, l'élément de moule comportant un motif comprenant une pluralité d'éléments en creux ou en protubérance venu de matière avec ledit élément de moule, ledit motif comprenant un agencement organisé d'une pluralité d'éléments (tels que des stries, trous, brins, lames), tout ou partie de ces éléments étant la répétition d'un même élément de base, le motif présent sur le moule permettant d'obtenir une texture particulière sur un pneumatique vulcanisé avec ledit moule.

**Un** tel élément de moule pourvu de ces caractéristiques présente notamment l'avantage de pouvoir être fabriqué en temps masqué, sans requérir d'opérations d'usinage laser postérieures à celles requises pour la conformation de l'élément lui-même, puisque l'ensemble est généré à partir d'opérations de même nature, du début à la fin de la fabrication de la pièce. Aucune opération d'usinage effectuée sur la pièce finie ne vient fragiliser ou ternir cette dernière.

Selon l'invention, la pluralité d'éléments de l'agencement organisé constituant le motif sont configurés, agencés et dimensionnés de façon à créer sur le pneumatique à mouler des textures dont le taux d'absorption de lumière est sensiblement supérieur aux zones non texturées. Les textures obtenues sur les pneumatiques moulés confèrent un aspect noir et mat à la partie texturée, formant un contraste d'intensité du niveau de noir avec les surfaces non texturées du pneumatique.

Selon l'invention, la profondeur des éléments en creux est inférieure ou égale à 30% de l'épaisseur de l'élément de moule ou la hauteur des protubérances est inférieure ou égale à 30% de l'épaisseur de l'élément de moule, et, préférentiellement, la profondeur des éléments en creux est inférieure ou égale à 15% de l'épaisseur de l'élément de moule ou la hauteur des protubérances est inférieure ou égale à 15% de l'épaisseur de l'élément de moule.

L'ajout des protubérances permet de rigidifier la peau. Les éléments en creux ne fragilisent pas cette peau du fait de leur très faible épaisseur relative.

De manière avantageuse, le motif est disposé sur un cordon ou une lamelle de l'élément de moule. Une telle architecture permet de mouler la texture du pneumatique dans une rainure (correspondant au cordon de la peau) ou une incision (correspondant à une lamelle de la peau) et apporte un aspect esthétique supplémentaire, par exemple un effet de profondeur.

Plusieurs variantes de réalisation des motifs sont prévues. Selon une variante, tout ou partie du motif est formé par des creux coniques répartis dans le motif selon une densité au moins égale à un creux conique par millimètre carré (mm²), chaque creux conique ayant une section moyenne comprise entre 0,0005 mm² et 1 mm².

Selon une autre variante, tout ou partie du motif sont des stries sensiblement parallèles entre elles, le pas des stries dans le motif étant au plus égal à 0,5 mm, chaque strie ayant une largeur moyenne comprise entre 0,02 mm et 0,25 mm.

Selon encore une autre variante, tout ou partie du motif forme en creux des parallélépipèdes de côté (C) compris entre 0,05 mm et 0,5 mm, de hauteur (Hp) comprise entre 0,05 mm et 0,5 mm, la distance entre deux parallélépipèdes adjacents dans la texture étant comprise entre 0,05 mm et 0.5 mm.

Selon un autre mode de réalisation avantageux, les parallélépipèdes présentent des formes et des distances variables entre eux.

Selon encore un autre mode de réalisation avantageux, les éléments en protubérance forment des brins, lesdits brins étant répartis dans le motif selon une densité au moins égale à un brin par millimètre carré (mm²), chaque brin ayant une section moyenne S comprise entre 0,0005 mm² et 1 mm².

L'élément de moule selon l'invention peut être configuré pour le moulage d'une zone de flanc de pneumatique, ou encore pour le moulage d'une zone de bande de roulement de pneumatique.

De manière avantageuse, l'élément de moule est réalisé par frittage laser.

L'invention prévoit également un moule à secteurs pour la vulcanisation de pneumatiques, chaque secteur comprenant un bloc support massif pourvu d'une surface de support et un ensemble de garniture rapporté sur le bloc support, l'ensemble de garniture comportant au moins un élément de moule tel que préalablement décrit, disposée contre une surface de support d'un bloc support.

### DESCRIPTION DES FIGURES

Tous les détails de réalisation sont donnés dans la description qui suit, complétée par les figures 1 à 8, présentées uniquement à des fins d'exemples non limitatifs, et dans lesquelles:
- la figure 1a est une vue en perspective d'un premier exemple d'un élément de moule comportant un motif selon l'invention;
- la figure 1b est une vue en perspective de l'élément de moule de la figure 1a posé sur un bloc support ;
- la figure 2a est une vue de face d'un second exemple de l'élément de moule avec bloc support selon l'invention;
- la figure 2b est une vue de côté de l'élément de moule de la figure 2a posé sur un bloc support ;
- la figure 3 présente un élément de moule comportant un motif formé de stries en creux dans le moule ;
- la figure 4 présente un élément de moule dans lequel les stries du motif ont une section de type pyramidale ;
- la figure 5 représente un motif comportant une pluralité de trous ;
- la figure 6 est une vue agrandie du motif de la figure 5 ;
- la figure 7 présente un élément de moule comportant un motif formé de brins en protubérance sur le moule ;
- la figure 8 présente un élément de moule comportant un motif formé de lames.

### DESCRIPTION DETAILLEE DE L'INVENTION

Par «motif» sur un moule, on entend un agencement organisé d'une pluralité d'éléments (stries, trous, brins, lames), tout ou partie de ces éléments étant la répétition d'un même élément de base, le motif présent sur le moule permettant d'obtenir une texture particulière sur un pneumatique.

Dans la description qui va suivre, des éléments sensiblement identiques ou similaires seront désignés par des références identiques.

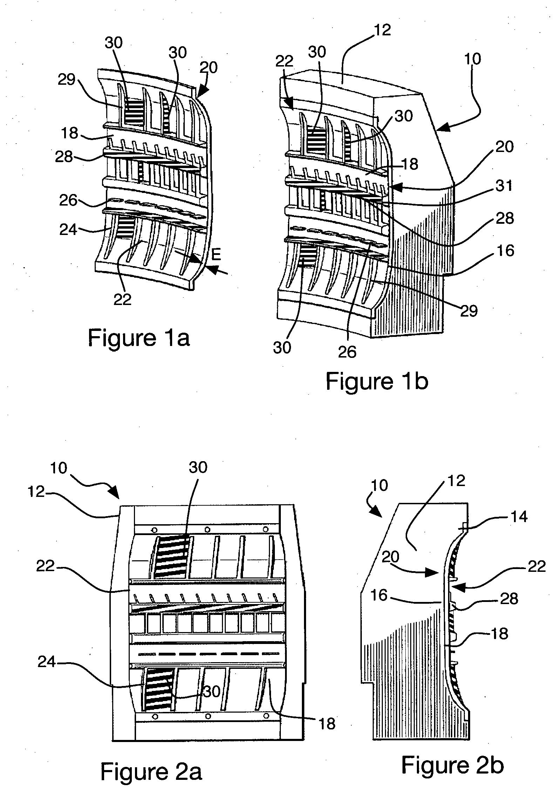

La figure 1 illustre une portion d'un moule 10 à secteurs pour la vulcanisation de pneumatiques. Le moule 10 comprend un corps 12 avantageusement réalisé en alliage d'aluminium et comprenant notamment une pluralité de surfaces support 16 destinées à recevoir une pluralité d'inserts 18. Chaque insert prend la forme d'une peau de faible épaisseur, sur laquelle sont agencés des réseaux d'éléments 24 de sculpture de pneumatique. Parmi les éléments 24 de sculpture, on retrouve notamment des lamelles 26 destinées à former des fentes circonférentielles dans la bande de roulement du pneumatique, ou des cordons circonférentiels 28 destinés à former un sillon longitudinal sur la bande de roulement du pneumatique. Les différents cordons 28 peuvent être reliés par des lamelles axiales 29 de manière à former le réseau d'éléments 24 de sculpture.

Chacun des inserts 18 comprend une première 20 et une seconde 22 surfaces opposées, la première surface 20 étant destinée à être en contact avec la surface support 16 du moule. Les inserts sont spécifiquement prévus pour permettre l'intégration sur le corps 12 de motifs 30 servant à produire des textures sur les pneumatiques qui seront moulés avec le moule. A cet effet, au moins une partie des inserts 18 comporte un motif 30 qui comprend une pluralité d'éléments en creux ou en protubérance, ledit motif étant venu de matière avec les inserts. En d'autres termes, chaque insert 18, incluant les motifs 30, est réalisé d'un seul tenant. L'épaisseur de chaque insert 18 est comprise entre 0,25 et 6 millimètres ou même plus.

Pour réaliser un tel insert 18, on procède avantageusement par frittage laser sélectif d'une poudre métallique. Lors de la fabrication de l'insert, on veille à ce que la forme de la première surface 20 soit complémentaire à la forme de la surface support 16 du corps 12 de manière à ce que l'insert 18 puisse coopérer correctement avec le corps.

L'élément de moule 18 comprend un ou plusieurs motifs 30. Selon les exemples de réalisation, les motifs 30 sont prévus entre les cordons et lamelles, et/ou sur des portions de cordons et/ou sur des portions de lamelles. Dans l'exemple de la figure 1b, des motifs 30 définissant des profils de formes sensiblement carrées sont prévues entre certaines lamelles. Selon l'aspect souhaité, on peut prévoir une quasi-infinité de formes ou profils de motifs. Un motif longitudinal est par ailleurs prévu le long d'un cordon 31. Cet exemple comporte également des textures sur les flancs des lamelles 29. Les motifs 30 sont également venus de matière avec l'élément de moule. Les éléments de moule, y compris les motifs 30, sont avantageusement réalisées par frittage laser, ce mode de fabrication procurant l'avantage de permettre la mise en forme de motifs très fins et/ou très complexes, tel que décrit dans ce qui suit.

La figure 2a illustre un autre exemple de réalisation dans lequel des motifs 30 sont prévues entre chacune des lamelles 24.

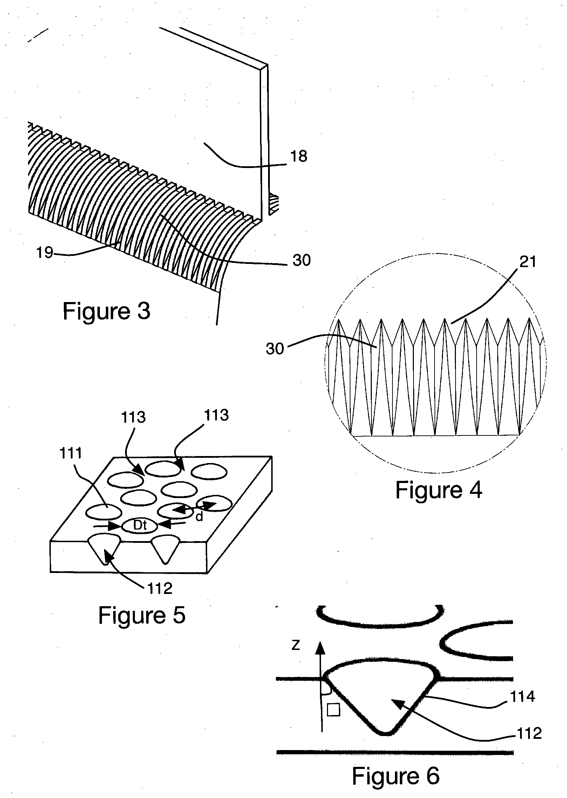

L'étendue des zones avec motif, les profils ainsi que les positionnements des zones avec motif varient en fonction des modes de réalisation. Les exemples illustrés n'étant fournis qu'à titre illustratif et non limitatif. En outre, les motifs peuvent prendre des formes striées, tel que représenté par exemple à la figure 3, montrant des stries 19 en forme de créneau, ou à la figures 4, montrant des stries 21 en forme de pyramide.

La figure 5 illustre le motif selon une première variante de réalisation non limitative du premier mode de réalisation. Dans cette variante, le motif est formé par une pluralité de cavités 112. Les cavités 112 sont ici en forme de cônes qui s'étendent dans la profondeur du moule et débouche sur le moule en formant des ouvertures circulaires 111. Les cavités 112 ont ainsi une section qui diminue dans la profondeur du moule. On notera que dans cette variante, les ouvertures 111 des cavités 112 ne se touchent pas. Les ouvertures 111 sont séparées par des zones intermédiaires 113. En outre, les ouvertures 111 sont régulièrement réparties sur le moule de sorte que la distance d entre chaque ouverture du motif est globalement similaire.

La figure 6 est une vue agrandie du motif de la figure 5. Tout ou partie des cavités a ici au moins une paroi 114 qui, selon une vue en coupe, forme un angle β compris entre 10° et 60° par rapport à une direction Z perpendiculaire au motif.

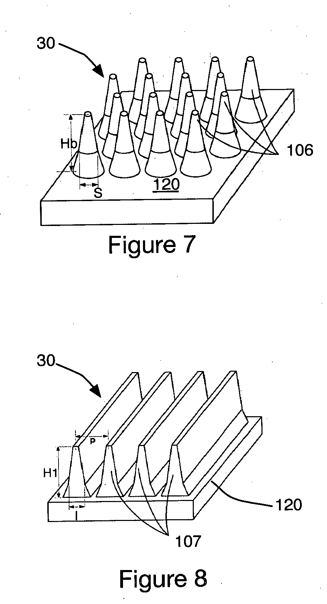

La figure 7 illustre un mode de réalisation dans lequel le motif 30 comporte une pluralité de brins 106. Les brins 106 étant répartis dans le motif selon une densité au moins égale à un brin par mm², chaque brin ayant une section moyenne S comprise entre 0,0005 mm² et 1 mm².

**On** notera que la section moyenne de chaque brin correspond à la moyenne des sections S mesurées à intervalles réguliers depuis la base du brin. Les brins 106 ont une forme globalement conique avec une section diminuant dans la hauteur Hb de ces brins.

La figure 8 illustre un mode de réalisation dans lequel le motif 30 comporte une pluralité de lames 107 parallèles entre elles, le pas des lames 107 dans le motif 30 étant au plus égal à 0,5 mm, chaque lame 107 ayant une largeur moyenne comprise entre 0,02 mm et 0,5 mm. On notera que la largeur moyenne correspond à la moyenne des largeurs I mesurées à intervalles réguliers dans la hauteur HI de la lame, la hauteur de chaque lame étant comprise entre 0,05 et 0,5 mm. Dans une autre variante de réalisation, le motif comporte une combinaison de brins 106 et/ou et de lames 107.

L'invention n'est pas limitée aux exemples décrits et représentés et diverses modifications peuvent y être apportées sans sortir de son cadre, qui est défini dans les revendications. Ainsi, selon une autre variante de réalisation non limitative, les lames 107 de la figure 8 peuvent être discontinues. Elles présentent une partie plane entre elles. Elles peuvent en outre présenter entre elles des différences de section. De plus, les lames peuvent posséder des courbures ou des angles, notamment dans leur longueur. Elles peuvent en outre, être de longueur variable.

Ainsi, selon une autre variante de réalisation non limitative, les cavités 112 peuvent avoir une section parallélépipédique de côté C compris entre 0,05 mm et 0,5 mm, de hauteur Hp comprise entre 0,05 mm et 0,5 mm, la distance entre deux cavités adjacentes dans la texture étant comprise entre 0,05 mm et 0.5 mm. En variante la section des cavités peut être circulaire, polygonale (par exemple hexagonale). Avec les structures carrée ou polygonale, il est possible d'organiser plus facilement les ouvertures 111 les unes par rapport aux autres de sorte à limiter la surface des zones intermédiaires 113 entre ces ouvertures. Avec de telles formes d'ouvertures, on peut arriver plus aisément à des taux conséquents d'occupation des ouvertures sur le moule.

Pour adapter un moule à la fabrication d'un nouveau type de pneumatique, il suffit de retirer les éléments de moule 18 disposés sur le corps 12, qui correspondent à l'ancien type de pneumatique fabriqué, puis de rapporter, avantageusement en une seule opération, les nouveaux éléments de moule 18 sur la surface 16 du corps 12. Du fait que les différents éléments 24 de garniture et les motifs 30 sont portés par une seule et unique peau 18, il est possible de rapporter tous les éléments de garniture d'un même secteur sur un bloc support 12 en une seule opération, ce qui est particulièrement rapide.

L'invention a été décrite en relation avec un moule de type à secteurs. Elle peut également être mise en œuvre en relation avec un moule d'un autre type.

### Références numériques utilisées sur les figures

- 10: Moule
- 12: Corps

- 16: Surface de support
- 18: Elément de moule
- 19: Strie en forme de créneau
- 20: Surface d'appui
- 21: Strie en forme de pyramide
- 22: Surface de moulage
- 24: Réseau d'éléments de sculpture de pneumatique
- 26: Lamelles
- 28: Cordons circonférentiels
- 29: Lamelles axiales

- 30: Motifs
- 31: Cordon
- 106: Brins
- 107: Lames
- 111: Ouverture circulaire
- 112: Cavité
- 113: Zone intermédiaire
- 114: Paroi

## Revendications

1. Elément de moule (18) destiné à être rapporté dans un moule (10) pour la vulcanisation de pneumatiques, l'élément de moule (18) présentant la forme d'une peau ayant une épaisseur (E) comprise entre 0,25 et 6 mm, ladite peau comprenant une surface d'appui (20) et, à l'opposée, une surface de moulage (22), destinée à former tout ou partie de la surface externe dudit pneumatique, comportant un motif (30) **caractérisé en ce qu'**il est pourvu d'une pluralité d'éléments en creux (19, 21, 112) de profondeur inférieure ou égale à 30% de l'épaisseur (E) de l'élément de moule, ou en protubérance (106, 107) de hauteur inférieure ou égale à 30% de l'épaisseur (E) de l'élément de moule, ladite pluralité d'éléments étant venue de matière avec ledit élément de moule (18), le motif (30) comprend un agencement organisé d'une pluralité d'éléments, tout ou partie de ces éléments étant la répétition d'un même élément de base, le motif présent sur le moule permettant d'obtenir une texture particulière sur un pneumatique vulcanisé avec ledit moule et **en ce que** ladite texture a un taux d'absorption de lumière supérieure à des zones non texturées du pneumatique.

2. Elément de moule (18) selon la revendication 1, dans lequel la profondeur des éléments en creux (19, 21, 112) est inférieure ou égale à 15% de l'épaisseur (E) de l'élément de moule ou la hauteur des protubérances (106, 107) est inférieure ou égale à 15% de l'épaisseur (E) de l'élément de moule.

3. Elément de moule (18) selon l'une des revendications précédentes, dans lequel le motif (30) est disposé sur un cordon (28) ou une lamelle (24) de l'élément de moule.

4. Elément de moule (18) selon l'une quelconque des revendications 1 à 3, **caractérisé en ce que** tout ou partie du motif (30) est formé par des cavités coniques (112) répartis dans la motif (30) selon une densité au moins égale à un creux conique par millimètre carré (mm²), chaque creux conique ayant une section moyenne comprise entre 0,0005 mm² et 1 mm².

5. Elément de moule (18) selon l'une quelconque des revendications 1 à3, **caractérisé en ce que** tout ou partie du motif (30) sont des stries (19, 21) sensiblement parallèles entre elles, le pas des stries dans le motif (30) étant au plus égal à 0,5 mm, chaque strie (19, 21) ayant une largeur moyenne comprise entre 0,02 mm et 0,5 mm.

6. Elément de moule (18) selon l'une quelconque des revendications 1 à 3, **caractérisé en ce que** tout ou partie du motif forme en creux des parallélépipèdes de côté (C) compris entre 0,05 mm et 0,5 mm, de hauteur (Hp) comprise entre 0,05 mm et 0,5 mm, la distance entre deux parallélépipèdes adjacents dans la texture étant comprise entre 0,05 mm et 0.5 mm.

7. Elément de moule (18) selon l'une quelconque des revendications 1 à 3, **caractérisé en ce que** les éléments en protubérance forment des brins (106), lesdits brins (106) étant répartis dans le motif (30) selon une densité au moins égale à un brin par millimètre carré (mm²), chaque brin ayant une section moyenne S comprise entre 0,0005 mm² et 1 mm².

8. Elément de moule (18) selon l'une quelconque des revendications 1 à 3, **caractérisé en ce que** les éléments en protubérance forment des lames (107) parallèles entre elles, le pas des lames (107) dans le motif (30) étant au plus égal à 0,5 mm, chaque lame (107) ayant une largeur moyenne comprise entre 0,02 mm et 0,5 mm.

9. Elément de moule (18) selon l'une quelconque des revendications 1 à 8, **caractérisé en ce que** les éléments en creux (19, 21, 112) ou en protubérance (106, 107) (109) présentent des formes et des distances variables entre eux.

10. Elément de moule (18) selon l'une quelconque des revendications 1 à 9, configurée pour le moulage d'une zone de flanc de pneumatique.

11. Elément de moule (18) selon l'une quelconque des revendications 1 à 9, configurée pour le moulage d'une zone de bande de roulement de pneumatique.

12. Elément de moule (18) selon l'une quelconque des revendications précédentes, réalisé par frittage laser.

13. Moule à secteurs pour la vulcanisation de pneumatiques, chaque secteur comprenant un bloc support massif pourvu d'une surface de support (16) et un ensemble de garniture rapporté sur le bloc support, l'ensemble de garniture comportant au moins un élément de moule (18) selon l'une des revendications 1 à 12, disposée contre une surface de support d'un bloc support.

## Patentansprüche

1. Formelement (18), das dazu bestimmt ist, in eine Form (10) zur Vulkanisierung von Reifen eingebracht zu werden, wobei das Formelement (18) die Form einer Haut mit einer Dicke (E) von 0,25 bis 6 mm aufweist, wobei die Haut eine Auflagefläche (20) und auf der Gegenseite eine Formfläche (22) aufweist, die dazu bestimmt ist, die Außenfläche des Reifens ganz oder teilweise zu formen, umfassend ein Muster (30), **dadurch gekennzeichnet, dass** es mit mehreren hohlen Elementen (19, 21, 112) mit einer Tiefe von 30 % der Dicke (E) des Formelements oder weniger oder mit einem Höhenvorsprung (106, 107) von 30 % der Dicke (E) des Formelements oder weniger versehen ist, wobei die mehreren Elemente mit dem Formelement (18) einstückig ausgebildet sind, wobei das Muster (30) eine aus mehreren Elementen zusammengestellte Anordnung aufweist, wobei diese Elemente ganz oder teilweise die Wiederholung eines gleichen Grundelements sind, wobei das auf der Form vorhandene Muster ermöglicht, auf einem vulkanisierten Reifen mit der Form eine besondere Textur zu erhalten, und dadurch, dass die Textur eine Lichtabsorptionsrate aufweist, die größer als die der nicht texturierten Bereiche des Reifens ist.

2. Formelement (18) nach Anspruch 1, wobei die Tiefe der hohlen Elemente (19, 21, 112) 15 % der Dicke (E) des Formelements oder weniger beträgt oder die Höhe der Vorsprünge (106, 107) 15 % der Dicke (E) des Formelements oder weniger beträgt.

3. Formelement (18) nach einem der vorangehenden Ansprüche, wobei das Muster (30) auf einem Strang (28) oder einer Lamelle (24) des Formelements angeordnet ist.

4. Formelement (18) nach einem der Ansprüche 1 bis 3, **dadurch gekennzeichnet, dass** das Muster (30) ganz oder teilweise durch konische Hohlräume (112) ausgebildet ist, die im Muster (30) in einer Dichte verteilt sind, die mindestens einem konischen Hohlraum pro Quadratmillimeter (mm²) entspricht, wobei jeder konische Hohlraum einen mittleren Querschnitt von 0,0005 mm² bis 1 mm² aufweist.

5. Formelement (18) nach einem der Ansprüche 1 bis 3, **dadurch gekennzeichnet, dass** das Muster (30) ganz oder teilweise Streifen (19, 21) darstellt, die zueinander im Wesentlichen parallel sind, wobei der Abstand der Streifen im Muster (30) höchstens 0,5 mm beträgt, wobei jeder Streifen (19, 21) eine mittlere Breite von 0,02 mm bis 0,5 mm aufweist.

6. Formelement (18) nach einem der Ansprüche 1 bis 3, **dadurch gekennzeichnet, dass** das Muster in Vertiefungen ganz oder teilweise Parallelepipede mit einer Seitenlänge (C) von 0,05 mm bis 0,5 mm und einer Höhe (Hp) von 0,05 mm bis 0,5 mm ausbildet, wobei der Abstand zwischen zwei in der Textur benachbarten Parallelepipeden 0,05 mm bis 0,5 mm beträgt.

7. Formelement (18) nach einem der Ansprüche 1 bis 3, **dadurch gekennzeichnet, dass** die vorspringenden Elemente Stränge (106) ausbilden, wobei die Stränge (106) im Muster (30) in einer Dichte verteilt sind, die mindestens einem Strang pro Quadratmillimeter (mm²) entspricht, wobei jeder Strang einen mittleren Querschnitt S von 0,0005 mm² bis 1 mm² aufweist.

8. Formelement (18) nach einem der Ansprüche 1 bis 3, **dadurch gekennzeichnet, dass** die vorspringenden Elemente zueinander parallele Blätter (107) ausbilden, wobei der Abstand der Blätter (107) im Muster (30) höchstens 0,5 mm beträgt, wobei jedes Blatt (107) eine mittlere Breite von 0,02 mm bis 0,5 mm aufweist.

9. Formelement (18) nach einem der Ansprüche 1 bis 8, **dadurch gekennzeichnet, dass** die hohlen Elemente (19, 21, 112) oder vorspringenden Elemente (106, 107) (109) Formen und Abstände aufweisen, die untereinander veränderlich sind.

10. Formelement (18) nach einem der Ansprüche 1 bis 9, gestaltet zum Formen eines Seitenwandbereichs eines Reifens.

11. Formelement (18) nach einem der Ansprüche 1 bis 9, gestaltet zum Formen eines Laufstreifenbereichs eines Reifens.

12. Formelement (18) nach einem der vorangehenden Ansprüche, ausgeführt durch Lasersintern.

13. Segmentierte Form zur Vulkanisierung von Reifen, wobei jedes Segment einen massiven Trägerblock umfasst, der mit einer Stützfläche (16) und einer am Trägerblock angebrachten Belaganordnung versehen ist, wobei die Belaganordnung zumindest ein Formelement (18) nach einem der Ansprüche 1 bis 12 umfasst, das gegen eine Stützfläche eines Trägerblocks angeordnet ist.

## Claims

1. Mould element (18) intended to be attached in a mould (10) for vulcanizing tyres, the mould element (18) having the form of a skin with a thickness (E) comprised between 0.25 and 6 mm, the said skin comprising a bearing surface (20) and, on the opposite side, a moulding surface (22) intended to form all or part of the external surface of the said tyre, comprising a pattern (30) **characterized in that** it is provided with a plurality of recessed (19, 21, 112) with a depth less than or equal to 30% of the thickness (E) of the mould element, or protruding (106, 107) elements with a height less than or equal to 30% of the thickness (E) of the mould element, said plurality of elements being formed as integral parts of the said mould element (18), the pattern (30) comprising an organised arrangement of a plurality of elements, all or some of these elements being the repeat of one and the same basic element, the pattern present on the mould making it possible to obtain a particular texture on a tyre vulcanized using the said mould, and **in that** said texture has a light absorption ratio higher than in the non-textured regions.

2. Mould element (18) according to Claim 1, in which the depth of the recessed elements (19, 21, 112) is less than or equal to 15% of the thickness (E) of the mould element or the height of the protrusions (106, 107) is less than or equal to 15% of the thickness (E) of the mould element.

3. Mould element (18) according to one of the preceding claims, in which the pattern (30) is arranged on a bar (28) or a sipe blade (24) of the mould element.

4. Mould element (18) according to any one of Claims 1 to 3, **characterized in that** all or part of the pattern (30) is formed by conical cavities (112) distributed through the pattern (30) with a density at least equal to one conical recess per square millimetre (mm²), each conical recess having a mean cross section comprised between 0.0005 mm² and 1 mm².

5. Mould element (18) according to any one of Claims 1 to 3, **characterized in that** all or part of the pattern (30) are substantially mutually parallel striations (19, 21), the spacing of the striations in the pattern (30) being at most equal to 0.5 mm, each striation (19, 21) having a mean width comprised between 0.02 mm and 0.5 mm.

6. Mould element (18) according to any one of Claims 1 to 3, **characterized in that** all or part of the pattern forms recessed forms of parallelepipeds of side length (C) comprised between 0.05 mm and 0.5 mm, of height (Hp) comprised between 0.05 mm and 0.5 mm, the distance between two adjacent parallelepipeds in the texture being comprised between 0.05 mm and 0.5mm.

7. Mould element (18) according to any one of Claims 1 to 3, **characterized in that** the protruding elements form strands (106), the said strands (106) being distributed through the pattern (30) with a density at least equal to one strand per square millimetre (mm²), each strand having a mean cross section S comprised between 0.0005 mm² and 1 mm².

8. Mould element (18) according to any one of Claims 1 to 3, **characterized in that** the protruding elements form mutually parallel strips (107), the spacing of the strips (107) in the pattern (30) being at most equal to 0.5 mm, each strip (107) having a mean width comprised between 0.02 mm and 0.5 mm.

9. Mould element (18) according to any one of Claims 1 to 8, **characterized in that** the recessed (19, 21, 112) or protruding (106, 107) (109) elements have mutually variable shapes and distances between them.

10. Mould element (18) according to any one of Claims 1 to 9, configured for moulding a tyre sidewall region.

11. Mould element (18) according to any one of Claims 1 to 9, configured for moulding a region of a tyre tread.

12. Mould element (18) according to any one of the preceding claims, produced by laser sintering.

13. Segmented mould for vulcanizing tyres, each segment comprising a solid support block provided with a support surface (16) and a set of linings attached to the support block, the set of linings comprising at least one mould element (18) according to one of Claims 1 to 12, arranged against a support surface of a support block.
